# DEMANDE DE BREVET EUROPEEN

(11) **EP 0 950 565 A1**
(43) Date de publication de la demande: **20.10.1999**
(21) Numéro de dépôt: 99390008.3
(22) Date de dépôt: 14.04.1999
(51) Int. Cl.: B60Q 1/56, B60Q 1/30

(54) **Plaque de route amovible à liaison radio**

(30) Priorité: 14.04.1998 FR 9804804
(71) Demandeur: S.T.E.A. Sarl, 31700 Cornebarrieu (FR)
(72) Inventeur: Bosc, Jean Louis, 31700 Cornebarrieu (FR)
(74) Mandataire: Ravina, Bernard

(57) **Abrégé**

La présente invention a pour objet une plaque de route amovible pouvant s'adapter sur différents supports ou véhicules (porte-vélo, remorque, caravane...) comprenant des moyens de signalisation et d'éclairage synchronisés à ceux du véhicule et pouvant supporter une plaque minéralogique. L'invention a pour particularité que les ordres de signalisation du véhicule vers la plaque amovible (clignotants, feux stop, feux de position, éclairage plaque, feux de brouillard, feux de recul...) sont transmis sans fil, par une liaison radio.

Pour éliminer les risques d'interférences entre plusieurs véhicules équipés du même système de plaque amovible, chaque plaque possède un code propre la différenciant de toutes les autres.

La plaque de route selon l'invention est composée:
- D'une plaque amovible (1 et 2) supportant la plaque minéralogique et intégrant le récepteur (25) ainsi que les moyens de signalisation et d'éclairage (28) de la plaque amovible.
- D'un émetteur (18) à l'intérieur du véhicule, connecté aux feux de signalisation et d'éclairage du véhicule.
- D'un récepteur (25) contenu dans la plaque amovible.
- De moyens de signalisation et d'éclairage (28) de la plaque amovible.

## Description

La présente invention a pour objet une plaque de route amovible pouvant s'adapter sur différents supports ou véhicules (porte-vélo, remorque, caravane...) comprenant des moyens de signalisation et d'éclairage synchronisés à ceux du véhicule et pouvant supporter une plaque minéralogique. L'invention a pour particularité que les ordres de signalisation du véhicule vers la plaque amovible (clignotants, feux stop, feux de position, éclairage plaque, feux de brouillard, feux de recul...) sont transmis sans fil.

Le code de la route impose à tout véhicule immatriculé une parfaite lisibilité des plaques d'immatriculation et impose une signalisation du dit véhicule par des feux de position, des feux stop, des feux indicateurs de direction, des feux de brouillard, des feux de recul et des feux d'éclairage de la plaque minéralogique.
Les remorques légères et les portes vélos n'échappent pas à cette règle. Pour reproduire la signalisation obligatoire, il faut une plaque complète, avec éclairage et feux, synchronisée au véhicule.

Les plaques amovibles du type connu ont l'inconvénient de nécessiter un câble reliant les feux du véhicule à ceux de la plaque pour synchroniser et alimenter les moyens de signalisation et d'éclairage. La liaison entre le câble de la plaque amovible et le véhicule est généralement assurée par une prise spéciale associée à un crochet d'attelage. Cela sous-entend donc que le véhicule doit être équipé d'un attelage complet. La pose d'un attelage ne se justifie pas pour l'utilisation de portes-vélos simplement maintenus par des sangles sur le coffre du véhicule. De plus même pour les véhicules équipés, la longueur de câble nécessaire est très différente qu'il s'agisse d'une caravane ou d'un porte vélo, ce qui offre très peu de commodités.

Le brevet US 5 198 798 (LIETZOW) décrit un dispositif de feux arrières sans fil. Ce type de dispositif est particulièrement adapté pour les remorques de tracteur par exemple. Les feux arrières sont montés sur un module amovible positionné à l'arrière de la remorque. Les lampes du module sont commandées par une télécommande indépendante du véhicule. Le module émet également un signal de retour permettant de donner certaines infonnations à la télécommande comme l'état des lampes ou le niveau de la batterie par exemple. C'est donc le conducteur qui, à partir de la télécommande allume les différents feux du module.

Ce type de dispositif ne peut absolument pas être adapté à un véhicule tel qu'une voiture, puisque le conducteur devrait commander lui même les différents feux de signalisation à partir de la télécommande, en même temps qu'il freine par exemple. On ne peut donc ainsi pas dire que les moyens de signalisation de la plaque sont synchronisés à ceux du véhicule puisque l'émetteur n'est pas relié aux fonctions arrières de signalisation du véhicule.

Le brevet WO92 20552 (CARLETTO) décrit un dispositif d'éclairage pour plaque minéralogique fixée de manière amovible sur un véhicule tracté. Ce dispositif comprend un émetteur relié aux différentes connections d'éclairage du véhicule, une plaque amovible comportant des moyens d'éclairage et un récepteur fixé à la plaque qui reçoit les informations que lui transmet l'émetteur et commande les lampes de la plaque. Un inconvénient majeur de ce dispositif se situe dans le cas ou plusieurs véhicules équipés du même dispositif se trouvent à proximité l'un de l'autre. En effet ce brevet ne décrit aucun moyen permettant d'éviter les interférences entre plusieurs dispositifs similaires, ainsi lorsqu'un véhicule transmet un ordre à sa plaque, rien n'empêche que cet ordre s'affiche également sur les plaques de véhicules voisins. On se rend ainsi parfaitement compte du danger que représente un tel dispositif.

La présente invention a pour but de palier aux inconvénients évoqués précédemment en mettant en oeuvre une liaison radio entre le véhicule et la plaque amovible. Pour éliminer les risques d'interférences entre plusieurs véhicules équipés du même système de plaque amovible, chaque plaque possède un code la différenciant des autres.

En outre, contrairement aux plaques de route amovibles habituelles ou les feux sont contenus dans des boîtiers rapportés sur la plaque, cette invention a la particularité d'intégrer dans le volume de la plaque les moyens de réception des ordres et de signalisation lumineux, ce qui lui confère un aspect compact et une meilleure résistance aux contraintes subies lors de son utilisation (résistance aux chocs, étanchéité...).

La plaque de route amovible selon l'invention est composée:
- D'une plaque amovible supportant la plaque minéralogique et intégrant le récepteur ainsi que les moyens de signalisation et d'éclairage de la plaque amovible.
- D'un émetteur à l'intérieur du véhicule, connecté aux feux de signalisation et d'éclairage du véhicule.
- D'un récepteur contenu dans la plaque amovible.
- De moyens de signalisation et d'éclairage de la plaque amovible.

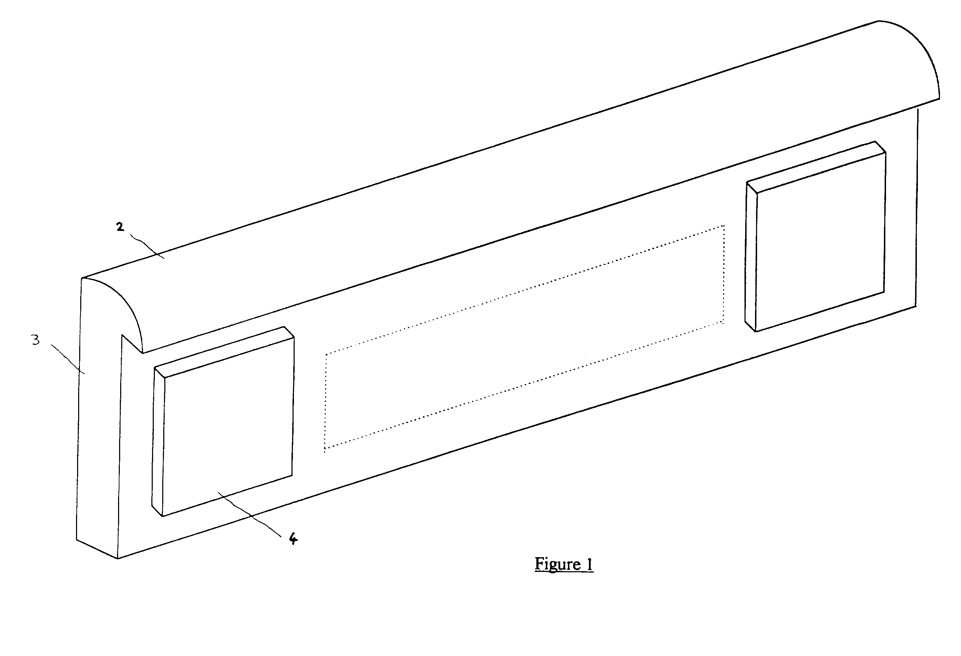

La figure 1 représente une vue générale en perspective de la plaque amovible.

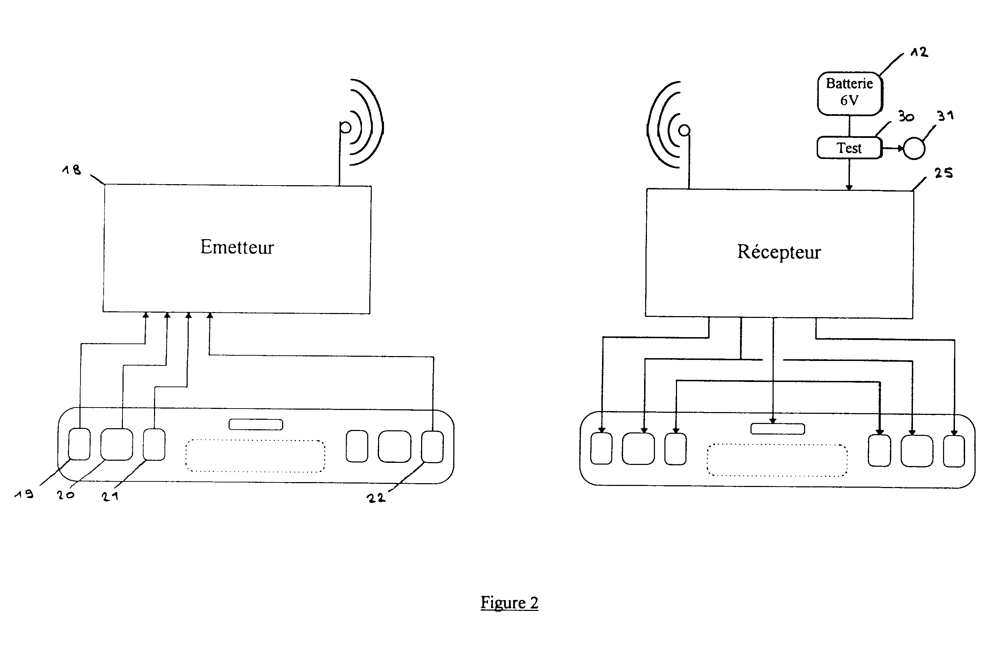

La figure 2 représente le schéma de fonctionnement de l'ensemble.

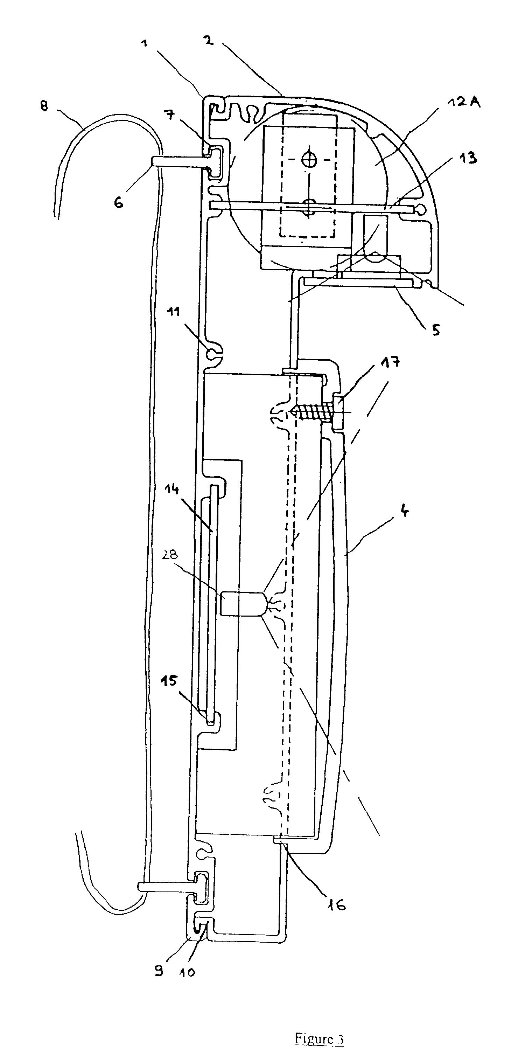

La figure 3 représente une vue de coté, en coupe de la plaque amovible.

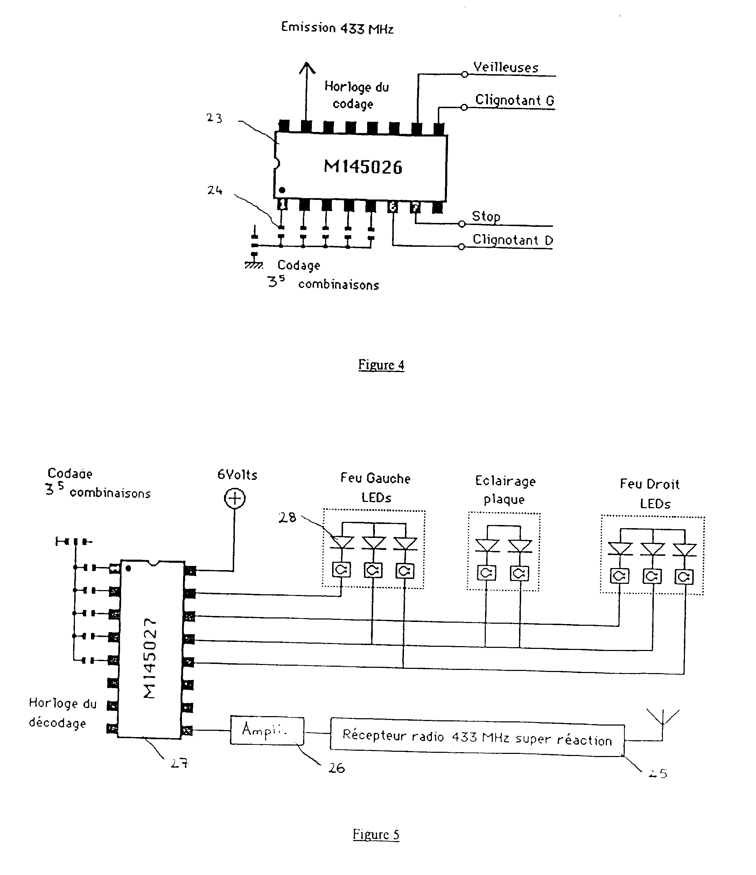

La figure 4 présente le circuit spécialisé composant en partie l'émetteur.

La figure 5 présente le circuit spécialisé composant en partie le récepteur.

La plaque amovible selon l'invention est constituée d'un support (1), d'une façade (2), de deux parois latérales (3) et de deux optiques (4) diffusant la lumière des feux de signalisation et d'un ou deux optiques (5) diffusant l'éclairage de la plaque minéralogique.

Le support est pourvu d'anneaux (6) maintenus dans des rainures (7) préformées dans le support, permettant l'accrochage au véhicule. II est prévu de faire passer une sangle (8) dans les anneaux (6) afin de fixer la plaque au véhicule.

La façade (2) vient se clipser sur le support (1) grâce aux profils complémentaires (9 et 10) préformés dans chacune des deux parties. Les parois latérales (3) sont vissées sur l'ensemble support-façade dans des trous préformés (11). Selon un autre mode de réalisation, les parois latérales peuvent également être clipsées.

La partie supérieure de la façade est bombée et surplombe la surface plane et les optiques d'éclairage (4), cette partie bombée permet d'intégrer l'alimentation électrique (12) de la plaque, qui peut être constituée de quatre piles type LR 20 (12A), et le circuit d'éclairage (13) de la plaque minéralogique. De plus, comme elle surplombe les optiques (4), elle pennet de les protéger contre des chocs éventuels.

La partie inférieure de la façade est constituée d'une surface plane pour le support d'une plaque minéralogique et de deux orifices pour le positionnement des optiques. L'ensemble support-façade forme une stnicture cavitaire dans laquelle sont contenus tous les moyens lumineux ainsi que le récepteur. Ces différents équipements sont intégrés sur des circuits imprimés (14) maintenus dans des glissières (15) préformées dans le support et dans la façade.

Les optiques des feux de signalisation sont positionnés par un contour (16) s'adaptant aux orifices prévus sur la façade et maintenus par deux vis (17) alignées verticalement.

L'émetteur (18) est placé à l'arrière du véhicule. II est relié aux différents feux, clignotant gauche (19), feux stop (20), feux de position (21) et clignotant droit (22).

La transmission des informations se fait par radio fréquence UHF. L'émetteur est constitué d'un codeur et d'un oscillateur UHF. Le codeur (23) est un circuit spécialisé. Le circuit imprimé prévoit 3⁵ possibilités de codage. En effet, chacune des 5 pattes du circuit peut être à 1 à 0 ou en l'air. La programmation du codage se fait à la fabrication par des pastilles fendues à souder (24).

Le fabricant peut gérer ainsi la personnalisation des séries. En outre, par modification de la fréquence d'horloge du codage, il est possible de créer d'autres séries de 3⁵ appareils différents.

L'oscillateur UHF est de type connu, sa fréquence d'émission est de 433 Mhz par exemple.

Le récepteur est composé d'un récepteur radio classique à super réaction (25) de fréquence 433 Mhz, d'un amplificateur et d'un décodeur. L'amplificateur (26) à grand gain, réalisé avec des composants classiques, pennet d'assurer la mise en fonne des signaux reçus pour les présenter au décodeur.

Le décodeur (27) va reconnaître le signal de l'émetteur. II délivre un signal logique de « transmission valide » ainsi que les quatre bits de données correspondant aux feux à allumer.

Le récepteur est relié aux différents moyens de signalisation et d'éclairage de la plaque amovible.

Les signaux lumineux sont assurés par des diodes électroluminescentes (LEDs) à très haute luminosité (28) (plus petites et consommant moins d'énergie que des ampoules ordinaires) montées sur des circuits imprimés.

L'autonomie est un point critique pour un système autonome, l'utilisation de LEDs, contrairement à des ampoules classiques, permet d'augmenter considérablement l'autonomie du système. A titre d'exemple, l'autonomie du système alimenté par 4 piles LR20 (12A) classique de 1,5V est de 400 heures en utilisation normale et de deux ans en veille.

On distingue trois types de circuits imprimés différents, un premier (14) (à gauche) sur lequel on trouve les LEDs de signalisation: Clignotant gauche, stop, et feux de position; le deuxième (à droite) est à la symétrie prés, le même que le premier; enfin, le troisième (13) (au milieu de la plaque) supporte la LED (ou 2 LEDs) d'éclairage de la plaque minéralogique. Pour assurer un meilleur éclairage de la plaque, ce circuit peut être doublé.

Ces différents circuits sont connectés au récepteur par des nappes à 5 fils. L'alimentation en énergie électrique (12) est assurée par 4 piles LR20 (12A) fourniissant une tension de 6V, ces piles sont situées dans la partie bombée de la façade, deux à chaque extrémité et le contact est assuré par des languettes métalliques souples.

Ces piles sont directement reliées au récepteur qui assure la commande de chaque circuit.

Un interrupteur à deux positions, situé entre les piles et le récepteur, pennet de mettre hors alimentation tout le dispositif.

La présente invention prévoit également un dispositif permettant de tester le niveau d'énergie des piles contenues dans la plaque amovible. Ce dispositif est composé d'un circuit de test (30) et de une ou deux diodes électroluminescentes (31) situées derrière les optiques (5) d'éclairage de la plaque d'immatriculation par exemple.

Ce dispositif pennet de garantir à l'utilisateur le niveau d'énergie des piles puisque les diodes (31) clignotent tant que le niveau est suffisant. Ce dispositif peut par exemple être intégré au circuit (13) d'éclairage de la plaque minéralogique.

## Revendications

1. Plaque de route amovible comportant des moyens de signalisation lumineuse et d'éclairage synchronisés à ceux d'un véhicule (clignotants, feux stop, feux de position, feux de brouillard, feux de recul, éclairage de la plaque minéralogique...) et pouvant supporter une plaque minéralogique, lesdits moyens de signalisation lumineuse et d'éclairage étant commandés depuis le véhicule vers la plaque amovible par ondes radio à partir d'un émetteur (18) situé dans le véhicule (relié aux fonctions arrières de signalisation lumineuse et d'éclairage du véhicule) vers un récepteur (25) situé dans la plaque amovible (relié aux moyens de signalisation lumineuse et d'éclairage de la plaque), ladite plaque amovible comportant une alimentation autonome en énergie électrique (12), ladite plaque amovible étant caractérisée en ce qu'elle met en oeuvre un codage de confidentialité entre l'émetteur (18) et le récepteur (25), évitant ainsi les risques d'interférence entre plusieurs véhicules équipés du même système de plaque amovible.

2. Plaque de route selon la revendication 1 caractérisée par le fait qu'elle fonne une structure cavitaire contenant l'ensemble des moyens de signalisation lumineuse et d'éclairage, d'alimentation en énergie électrique (12), et de réception (25).

3. Plaque de route amovible selon la revendication 2 caractérisée en ce que la structure cavitaire de la plaque est composée d'un support (1), d'une façade (2) clipsée sur le support, sur laquelle sont rapportés deux optiques (4) démontables et de deux parois latérales (3).

4. Plaque de route amovible selon la revendication 3 caractérisée par la forme bombée et surplombante de la partie supérieure de la façade (2) de la plaque qui assure une protection des optiques (4) et de la plaque minéralogique et qui permet de contenir les moyens d'alimentation électrique.

5. Plaque de route amovible selon la revendication 1 caractérisée par le fait que les signaux lumineux d'éclairage et de signalisation peuvent être assurés par des diodes électroluminescentes (LEDs) à faible consommation d'énergie (pennettant ainsi une plus grande autonomie du système) et à haute luminosité.

6. Plaque de route amovible selon la revendication 1 caractérisée en ce que l'alimentation électrique autonome est constituée par des piles standards (12A) type LR20.

7. Plaque de route amovible selon la revendication 1 caractérisée en ce que le codage de confidentialité est programmé sur des circuits spécialisés par des pastilles fendues à souder.

8. Plaque de route amovible selon la revendication 7 caractérisée en ce que le codage de confidentialité sur 5 pattes du circuit spécialisé permet d'obtenir 3⁵ combinaisons pour une même fréquence d'horloge, chaque patte pouvant être à 1, à 0 ou en l'air.

9. Plaque de route amovible selon la revendication 8 caractérisée en ce que le nombre de combinaison peut être augmenté en utilisant différentes fréquences d'horloges.

10. Plaque de route amovible selon la revendication 1 caractérisée en ce qu'elle comporte un dispositif (30) permettant de tester le niveau d'énergie de l'alimentation électrique autonome (12).

11. Plaque de route amovible selon la revendication 10 caractérisée en ce que le dispositif de test du niveau d'énergie comporte une ou plusieurs diodes électroluminescentes (31) qui clignotent tant que le niveau est suffisant.
